# EUROPEAN PATENT APPLICATION

(11) **EP 2 455 981 A2**
(43) Date of publication of application: **23.05.2012**
(21) Application number: 10799997.1
(22) Date of filing: 12.07.2010
(51) Int. Cl.: H01L 31/042, H01L 31/052

(54) **PHOTOVOLTAIC POWER-GENERATING APPARATUS**

(30) Priority: 13.07.2009 KR 20090063525
(71) Applicant: Winning Business Co., Ltd., Daejeon 305-732 (KR)
(72) Inventor: KIM, Seung-Seop, Daejeon 301-130 (KR)
(74) Representative: Riemann, Jörg
(86) International application number: PCT/KR2010/004504
(87) International publication number: WO 2011/007986

(57) **Abstract**

The present invention relates to a photovoltaic power-generating apparatus. The photovoltaic power-generating apparatus according the present invention comprises: a solar cell module for collecting a solar light and converting the collected solar light into an electrical energy; a frame comprising an upper frame in which the solar cell module is installed, a lower frame spaced apart from the upper frame in the downward direction, and a support frame part which interconnects the upper frame and the lower frame and has a plurality of support frames spaced apart from each other, wherein the frame enables the solar cell module to be outwardly exposed from a surface of water; a fluid delivery unit which moves the fluid from an interior of one of the support frames to an interior of another support frame in such a manner that a center of gravity of the frame changes on the water surface and a posture of the frame changes; and a control unit which calculate the target posture of the frame for the given sun location, and controls the fluid delivery unit in accordance with a data obtained from the calculation, in such a manner that the support frames are in communication with each other or closed to each other in order to change the center of gravity of the frame.

## Description

### Technical Field

The present invention relates to a photovoltaic power-generating apparatus. More particularly, the present invention relates to a photovoltaic power-generating apparatus in that a frame including solar cell modules is installed on a water surface, so that the frame seeks the sun, whereby transporting fluid or masses within the frame, changing the center of gravity of the frame and the posture of the entire frame.

### Background Art

Generally, a fixed type photovoltaic power-generating plant, which is installed on the ground, was firstly proposed. Then, single axis type and dual axes type photovoltaic power-generating plants etc. capable of moving along the sunlight had been proposed in order.

Here, in the single axis type and dual axes type photovoltaic power-generating plants, there is a way to rotate the structures having solar cells on the axis by using an electric motor or an oil hydraulic motor, which are formed on the upper portion of the pillar vertically coupled to a flat ferroconcrete base.

However, in the fixed type photovoltaic power-generating plant installed on the ground, since the size of the structures for fixing the solar cells becomes larger, there is a problem in that the installation cost for stabilizing the posture thereof can be increased.

In the meantime, a photovoltaic power-generating plant, which is installed on the surface of water, has been proposed. Korean patent laying-open gazette 10-2009-0095401 discloses a technique in that solar cells are installed on and automatically tilted on a flat upper plate so as to cope with the variation of an elevation angle of the sun in spring, summer, fall and winter and a screw attached to floating structures, which is located below the water surface, is rotated, thereby controlling the direction of the floating structures according to the locations of morning sun, noon sun and evening sun.

However, there is a problem in that the solar cells installed on the flat upper plate cannot be densely installed owing to a shadow interference. Also, it requires more areas and floating structures, which is expensive in terms of installation.

### Disclosure

### Technical Problem

Therefore, the present invention has been made to solve the above-mentioned problems, and the object of the present invention is to provide a frame including solar cell modules is installed on a water surface, so that the frame with less areas and costs seeks the sun that has daily and seasonal variations in the azimuth angle and elevation angle, whereby transporting fluid or masses, changing the center of gravity of the frame and the posture of the entire frame.

### Technical solution

In accordance with an aspect of the present invention to achieve the object thereof, there is provided a photovoltaic power-generating apparatus comprising: solar cell modules for collecting a solar light and converting the collected solar light into an electrical energy; a frame comprising an upper frame in which the solar cell modules are installed, a lower frame spaced apart from the upper frame in the downward direction, and a support frame part which interconnects the upper frame and the lower frame and has a plurality of support frames spaced apart from each other, wherein the frame enables the solar cell modules to be outwardly exposed from a surface of water; a fluid delivery unit which transports the fluid from an interior of one of the support frames to an interior of another support frame in such a manner that a center of gravity of the frame changes on the water surface and a posture of the frame changes; and a control unit which analyzes changes in an azimuth angle of the solar light, and controls the fluid delivery unit in accordance with a data obtained from the analysis, in such a manner that the support frames are in communication with each other or closed to each other in order to change the center of gravity of the frame.

Here, the support frame part comprises a first support frame, a second support frame, and a third support frame and the fluid delivery unit, which is formed on each support frame comprises valves for allowing each support frame to be opened in communication with each other or closed to each other and a pump for transporting the fluid from each support frame to another support frame during opening of each valve.

In the meantime, the support frame part comprises a first support frame, a second support frame, a third support frame, and a forth support frame. The first and second support frames are opposed to each other, the third support frame is spaced apart from the first and second support frames, and the third and fourth support frames are opposed to each other.

At this time, the support frame part comprises a first valve for allowing the first and second support frames to be opened in communication with each other or closed to each other, a second valve for allowing the third and fourth support frames to be opened in communication with each other or closed to each other, and a pump for allowing the fluid to be moved between the first and second support frames during opening of the first valve or to be moved between the third and fourth support frames during opening of the second valve.

Also, the lower frame is in the form of a hollow type, whereby being filled with water or air, mass, and providing a buoyancy to the frame.

In the meantime, In accordance with another aspect of the present invention to achieve the object thereof, there is provided a photovoltaic power-generating apparatus comprising: solar cell modules for collecting solar lights and converting the collected solar light into an electrical energy; a frame comprising an upper portion in which the solar cell modules are installed and a buoyancy means for providing a buoyancy thereto in such a manner that the solar cell modules are outwardly exposed from a surface of water; first and second guide axes formed at the frame and intersected with each other; first and second mass weights along first and second guide axes through a linear reciprocating motion respectively; a mass weight delivery unit for moving any of first and second mass weights so as to change a posture of the frame on the water surface; and a control unit for controlling the mass weight delivery unit, wherein the first and second mass weights are moved along the first and second guide axes through a linear reciprocating motion, whereby the posture of the frame changes.

Here, the first and second guide axes are actually parallel to the solar cell module.

At this time, the mass weight delivery unit comprises a motor installed in one side of each mass weight in such a manner that each mass weight can be moved along each guide axis according the control of the control unit.

Also, the control unit analyzes changes in an azimuth and elevation angle of the sun through any of sensor operating method, GPS tracking method, and calculating method based on the astronomical theory.

### Advantageous Effects

According to the power generating apparatus as described above, there is an effect in that the frame including the solar cell modules are installed on the water surface, so that the frame with less area and costs seek the sun that has variations in the azimuth and elevation, whereby transporting fluid or masses within the frame, and changing the center of gravity of the frame and the posture of the entire frame.

Also, the solar cell module, the floating means of the frame, and the means for changing the posture of the framed etc. are integrally formed therein, whereby the manufacturing and installing costs can be reduced.

Moreover, the solar cells can be formed on the entire upper portion of the frame that the solar cell module is installed thereon.

### Brief Description of the Drawings

The foregoing and other objects, features and advantages of the present invention will become more apparent from the following detailed description when taken in conjunction with the accompanying drawings in which:
FIG. 1 is a schematic perspective view illustrating a photovoltaic power-generating apparatus of a first embodiment of the present invention;
FIG. 2 is a schematic perspective view illustrating the support frame part and the fluid delivery unit of FIG. 1;
FIG. 3 is a schematic perspective view illustrating a support frame part and a fluid delivery unit according to a transformational example of the first embodiment of present invention;
FIG. 4 and FIG. 5 are sectional views illustrating an operational status of a photovoltaic power-generating apparatus of the transformational example of the first embodiment of present invention;
FIG. 6 is a schematic perspective view illustrating a photovoltaic power-generating apparatus of a second embodiment of the present invention; and
FIG. 7 and FIG. 8 are sectional views illustrating an operational status of a photovoltaic power-generating apparatus of a transformational example of the second embodiment of present invention.

### <Descriptions on reference numbers for the major components in the drawings>

| | |
|---|---|
| 10: frame | 11: upper frame |
| 12: lower frame | 13: support frame |
| 20, 20A: support frame part | 21: first support frame |
| 22: second support frame | 23: third support frame |
| 24: fourth support frame | 30: fluid delivery unit |
| 31: first valve | 32: second valve |
| 33: third valve | 34: pump |
| 40: control unit | |

### Best Mode

### Mode for Invention

Hereinafter, exemplary embodiments of the present invention will be described in detail with reference to the accompanying drawings.

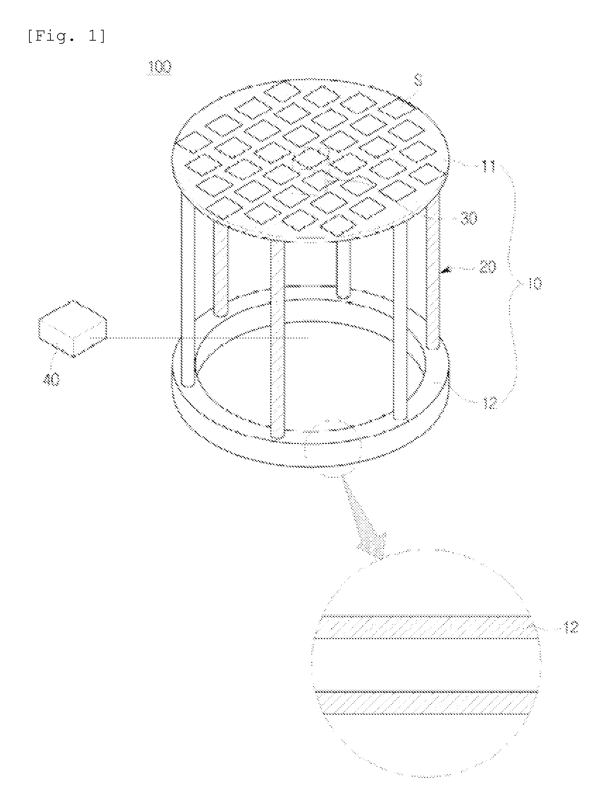

FIG. 1 is a schematic perspective view illustrating a photovoltaic power-generating apparatus of a first embodiment of the present invention. Referring to FIG. 1, the photovoltaic power-generating apparatus 100 of a first embodiment of the present invention includes a frame 10, a fluid delivery unit 30, and a control unit 40.

The frame 10 includes an upper frame 11 that a solar cell module, which collects a solar light and converts the collected solar light into an electrical energy, is installed on an upper portion thereof, a lower frame 12 spaced apart from the upper frame in the downward direction, and a support frame part which interconnects the upper frame and the lower frame and includes a plurality of support frames spaced apart from each other.

At this time, preferably, the solar cell module (s), which is formed at the upper frame 11, is lied on the upper frame 11, that is, parallel to the upper frame 11 so as to collects the solar light more and more.

Also, the lower frame 12 is a hollow type and both ends thereof are sealed, so that the lower frame and the parts of supporting frames collectively enable the solar cell module (S), which is formed on the upper frame 10, to be outwardly exposed from the surface of water during the install thereof on the water, thereby a buoyancy can be occurred in the frame 10.

At this time, the inside of the lower frame 12 can maintain a hollow condition. However, any material such as air, or water, mass can be filled therein.

Also, as shown, the lower frame 12 is in the form of a donut. However, it can be formed in the various shapes such as a polygon or a circular plate, cube, cylinder, etc.

Moreover, a mooring means (not shown) such as a predetermined anchor, which is used in a conventional ship etc., can be further formed at a predetermined portion of the frame 10 in order that it is not floated owing to turbulence of the water during the installing in the sea or lake and so forth.

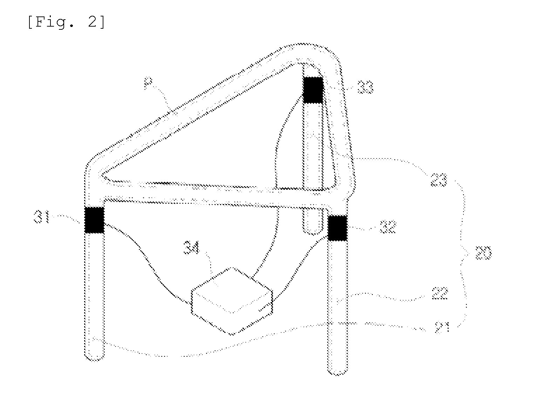

FIG. 2 is a schematic perspective view illustrating the support frame part and the fluid delivery unit of FIG. 1. Referring to FIG. 1 and FIG. 2, the support frame part 20 includes a plurality of hollow support frames which interconnects the upper frame 11 and the lower frame 12 to be supported to each other.

Here, the support frame part 20 includes a first support frame 21, a second support frame 22, and a third support frame 23, which are spaced apart from each other, and a communicating pipe (P) for allowing each support frame to be connected in communication with each other.

At this time, the lower end portions of each support frame are sealed so as to store the moved fluid. Here, it is preferred that three support frames are spaced apart at a predetermined distance in such a manner that the outline thereof forms a triangle or an equilateral triangle.

The fluid delivery unit 30 formed on the upper portion of each support frame includes a first valve 31, a second valve 32, and a third valve 33 for allowing each support frame to be opened in communication with each other or closed to each other and a pump 34 for moving the fluid from an interior of one of the support frames to an interior of another support frame during opening of each valve.

The above first through third valves and pump are connected to each other so as to be operated according to a control signal of the following control unit 40.

For example, where the fluid is moved from the first support frame 21 to the second support frame 22, the first and second valves 31 and 32 are opened in such a manner that the first and second support frames 21 and 22 are in communication with each other and the pump 34 is operated in a state that the third valve 33 is closed, so that the fluid of a predetermined amount stored in the inside of the first support frame 21 can be moved to the second support frame 22.

In this manner, the fluid can be moved from the first support frame 21 to the third support frame 23, or the second support frame 22 to the third support frame 23.

As a result, the location of the center of gravity of the frame 10, which is floated on the surface of the water, can change through the movement of the fluid among the support frames.

Continuously, the control unit 40 can be formed at the frame 10 or separately formed therein. Also, the control unit 40 is embodied by an algorithm in such a manner that target posture of the frame 10 can be calculated for the given the location of the sun through any of well-known sensor operating method, GPS tracking method, and calculating method based on astronomical theory.

Also, the control unit 40 serves to operate the fluid delivery unit 30 according to the calculated target posture of the frame 10, so that the predetermined amount of the fluid can be moved and the center of gravity of the frame can change, thereby changing the posture of the frame 10.

Since the operation of the photovoltaic power-generating apparatus of a first embodiment of the present invention is the same as that of a transformational example of the first embodiment of present invention, it will be simultaneously explained together with the transformational example of the first embodiment of present invention.

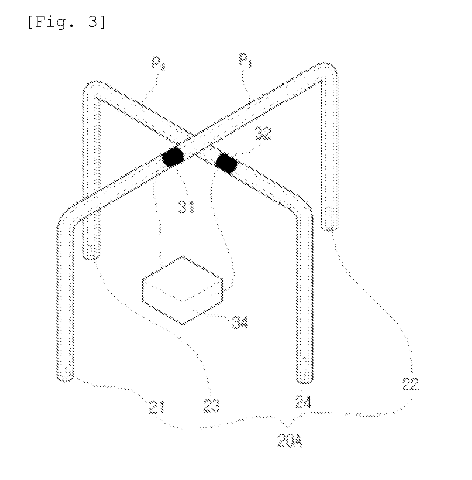

FIG. 3 is a schematic perspective view illustrating a support frame part and a fluid delivery unit according to a transformational example of the first embodiment of present invention. In comparison with three support frames of the first embodiment of the present invention, the support frame part of the transformational example of the first embodiment of present invention includes four support frames. Also, the fluid delivery unit for moving the fluid stored in each support frame corresponds to four support frames. Since other elements are identical with the first embodiment, further descriptions on these are omitted here.

Referring to FIG. 3, the support frame part 20A according to the transformational example of the first embodiment of present invention includes a plurality of support frames which interconnects the upper frame 11 and the lower frame 12 to be supported to each other. The support frame part 20 includes a first support frame 21, a second support frame 22, a third support frame 23, a forth support frame 24, and first and second communicating pipes P1 and P2.

Here, each support frame is formed in a hollow shape, which is empty therein similarly with the first embodiment.

Here, the first and second support frames 21 and 22 are opposed to each other and connected in communication with each other through the first communicating pipe (P1).

Also, the third and forth support frames 23 and 24 are opposed to each other and connected in communication with each other through the second communicating pipe (P2).

In the meantime, as shown, two communicating pipe P1 and P2 are separately formed. However, two communicating pipe P1 and P2 can be connected to each other through the extension of the fluid delivery unit.

The fluid delivery unit 30 includes a first valve 31, a second valve 32, and a pump 34.

The first valve 31 is formed at the first communicating pipe P1 in order that the first and second support frames 21 and 22 are opened in communication with each other or closed to each other. Also, the second valve 32 is formed at the second communicating pipe P2 in order that the third and forth support frames 23 and 24 are opened in communication with each other or closed to each other.

The first valve 31 and the second valve 32 are controlled through the control unit 40 like the first embodiment.

Also, the pump 34 is operated according to the control signal of the control unit 40. The pump is configured in such a manner that the fluid is moved from the first support frame 21 to the second support frame 22 or from the second support frame 22 to the first support frame 21 during opening of the first valve 31.

On the contrary, the second valve 32 is also operated similarly with the first valve 31, the fluid stored in the third and fourth support frames 23 and 24 can be moved between them.

The control unit 40 can be formed at the frame 10 or separately formed therein like the first embodiment. Also, the control unit 40 is embodied by the algorithm in such a manner that target posture of the frame 10 can be calculated along the location of the sun through the data obtained by the above well-known methods.

Also, the control unit 40 serves to operate the fluid delivery unit 30 according to the calculated target posture of the frame 10, so that the predetermined amount of the fluid can be moved and the center of gravity of the frame can change, thereby changing the posture of the frame 10.

Hereinafter, the operation of the photovoltaic power-generating apparatus of the transformational example of the first embodiment of present invention will be described.

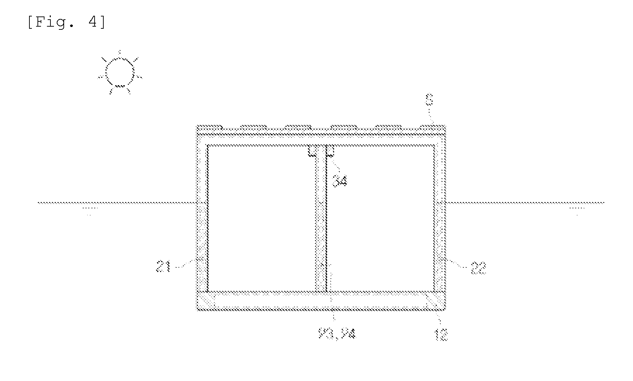

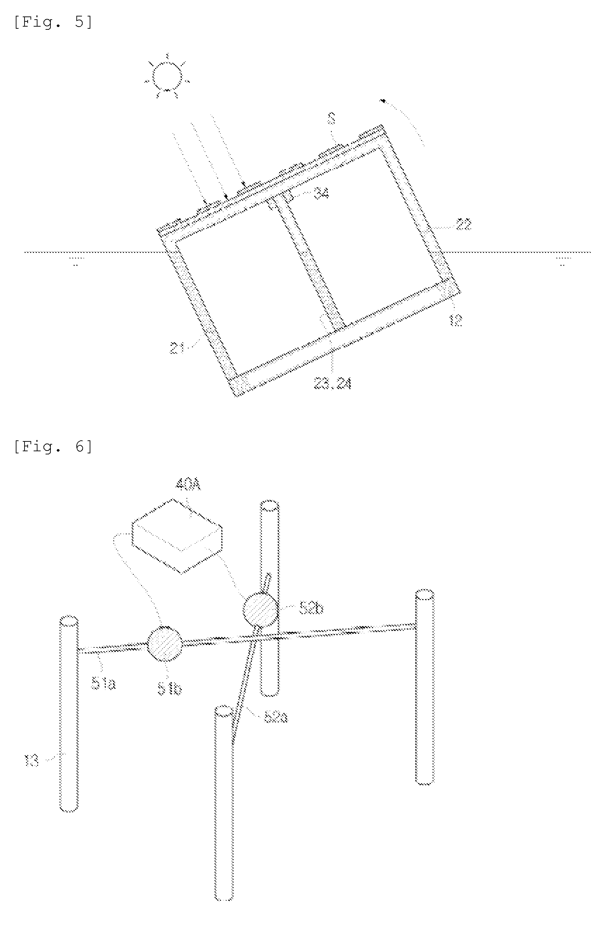

FIG. 4 and FIG. 5 are sectional views illustrating an operational status of a photovoltaic power-generating apparatus of the transformational example of the first embodiment of present invention. Referring to FIG. 4, when the frame 10 is formed on the surface of the water, the entire frame 10 is floated on the surface of the water through the buoyancy of the lower and parts of supporting frame 10.

Here, a predetermined fluid can be filled into each support frame of the support frame part 20 before or after the installation thereof.

In this status, the control unit 40 obtains target posture thorough the above well-known methods and then, opens the first and second valves 31 and 32 and drives the pump according to the obtained data, so that the fluid is moved from the second support frame 22 to the first support frame 21, thereby posturing the frame 10.

In this manner, the fluid is moved from the second support frame 22 to the first support frame 21, so that the center of gravity of the frame 10 can change, thereby inclining the frame 10 in a predetermined angle.

Similarly, the fluid stored in the third support frame 23 and the fourth support frame 24 is moved, so that the center of gravity of the frame 10 can be changed, thereby inclining the frame 10 in other direction and angle.

Also, since the amount of fluid stored in the first support frame 21, the second support frame 22, the third support frame 23, and the fourth support frame 24 can be accurately controlled by the control unit 40, it is possible for the frame 10 to have any posture.

As a result, the fluid is moved as described above, as shown in FIG. 5, since the solar cell module (S) is perpendicular to the solar light, it can more effectively collect the solar light.

In the meantime, the photovoltaic power-generating apparatus of a first embodiment of the present invention is also, operated similarly with another embodiment of the present invention, so that the center of gravity of the frame 10 changes and the frame 10 has the target posture, thereby the solar cell module (S) can be perpendicular to the solar light.

Consequently, in comparison with the conventional art in that the solar cell modules are installed with spaces due to the shadow interference on the floating body that has rotating and tilting means for seeking the sun, embodiment of the present invention hires posture control of the frame for seeking the sun, removing the need for the space between the solar cell modules.

Also, since the interference phenomenon is removed, the solar cell module can be installed on the entire upper frame, thereby improving the efficiency thereof within same area in comparison with the conventional art.

Moreover, since the floating structures and tilting structures, which are separately from each other in the conventional art, are combined in one frame in the present invention, the manufacturing and installing costs can be reduced in comparison with the conventional art.

Hereinafter, a photovoltaic power-generating apparatus of a second embodiment of the present inventions of the present invention will be described. In the photovoltaic power-generating apparatus of the second embodiment of the present inventions, the means for changing the center of gravity of the frame is changed from the fluid to a mass.

FIG. 6 is a schematic perspective view illustrating a photovoltaic power-generating apparatus of a second embodiment of the present invention.

Referring to FIG. 6, the photovoltaic power-generating apparatus 100 of the second embodiment of the present invention includes the upper frame 11, the lower frame 12, the support frame 13, and the control unit, like the first embodiment of the present invention. Here, the upper frame 11 and the lower frame 12 are omitted in FIG. 6.

The upper frame 11 and the lower frame 12 are the same as those of the first embodiment. At least four support frames 13 are formed between the upper frame 11 and the lower frame 12. Preferably, two pairs of support frames 13 are formed face to face with each other.

A first guide axis 51a and a second guide axis 51b are formed between two pairs of support frames 13, which are formed face to face with each other, respectively.

A first mass weight 51b and a second mass weight 52b for moving along each guide axis are formed at the first guide axis 51a and the second guide axis 51b respectively.

Here, the first guide axis 51a and the second guide axis 51b are actually parallel to the solar cell module (s), which is formed at the upper frame 11, so as to easily change the center of gravity of the frame according to the movement of the mass weight.

A mass weight delivery unit (not shown) having a predetermined motor is installed in one side of each mass weight. That is, the mass weight delivery unit is installed in such a manner that each mass weight can be moved along each guide axis through a linear reciprocating motion according the control of the control unit 40A.

Here, it is preferred that the mass weight delivery unit is equipped with each mass weight so as to prevent it from being directly contacted with the water.

That is, according to the movement of two mass weights, the center of gravity of the frame 10 can be changed, so that the frame 10 formed on the surface of the water can be set with the target posture.

Like the first embodiment, the control unit 40 can be formed at the frame 10 or separately formed therein. Also, the control unit 40 is embodied by an algorithm in such a manner that target posture of the frame 10 can be calculated along a solar light through a data obtained any of well-known sensor operating method, GPS tracking method, and calculating method based on astronomical theory.

Moreover, the control unit allows the motors, which are built-in the first mass weight 51b and the second mass weight 52b, to be operated according to the calculated target posture, so that the first and second weights can be moved along the first and second guide axes 51a and 52a, thereby changing the center of gravity of the frame 10.

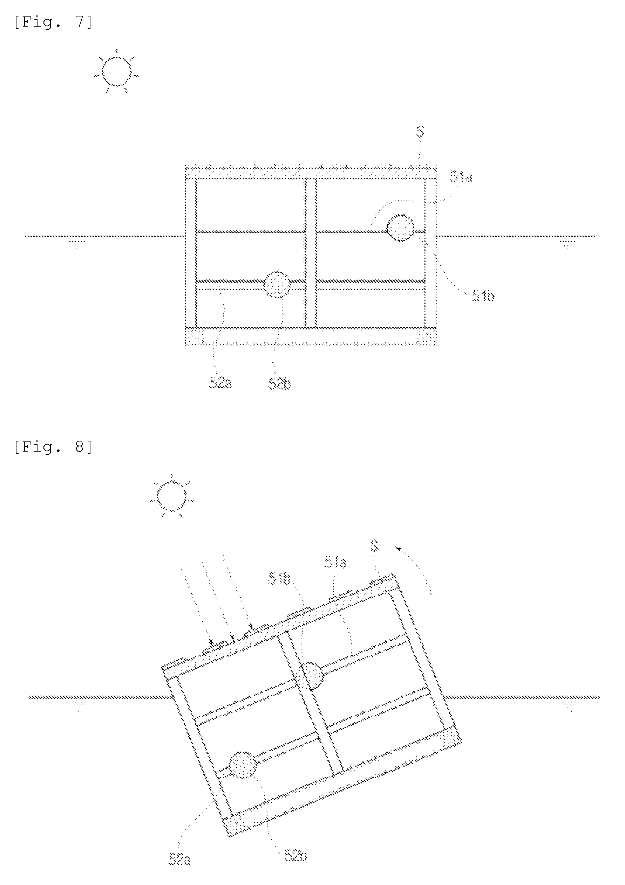

FIG. 7 and FIG. 8 are sectional views illustrating an operational status of a photovoltaic power-generating apparatus of a transformational example of the second embodiment of present invention. Referring to FIG. 7, when the frame 10 is formed on the surface of the water, the entire frame 10 is floated on the surface of the water through the buoyancy of the lower frame 10.

At this time, the control unit 40A calculates the target posture for the given sun location and then, allows the first mass weight 51b and the second mass weight 52b to be moved according to the calculated data, thereby setting the posture of the frame 10.

That is, the first and second mass weights 51b and 52b are moved along each guide axis at a predetermined distance according the control of the control unit 40A, so that the center of gravity of the frame 10 is changed, thereby inclining the frame 10 in a predetermined angle.

Accordingly, as shown in FIG. 8, since the solar cell module (S) is perpendicular to the solar light, it can more effectively collect the solar light.

Although several exemplary embodiments of the present invention have been described for illustrative purposes, those skilled in the art will appreciate that various modifications, additions and substitutions are possible, without departing from the scope of the invention as disclosed in the accompanying claims.

### Industrial Applicability

The present invention relates to a techniques used in a photovoltaic power-generating plant or equipment, which are installed on a reservoir, a lake, a river, and a sea.

## Claims

1. A photovoltaic power-generating apparatus comprising:
a solar cell module for collecting a solar light and converting the collected solar light into an electrical energy;
a frame comprising an upper frame in which the solar cell module is installed, a lower frame spaced apart from the upper frame in the downward direction, and a support frame part which interconnects the upper frame and the lower frame and has a plurality of support frames spaced apart from each other, wherein the frame enables the solar cell module to be outwardly exposed from a surface of water;
a fluid delivery unit which moves the fluid from an interior of one of the support frames to an interior of another support frame in such a manner that a center of gravity of the frame changes on the water surface and a posture of the frame changes; and
a control unit which analyzes changes in an azimuth angle of the solar light, and controls the fluid delivery unit in accordance with a data obtained from the analysis, in such a manner that the support frames are in communication with each other or closed to each other in order to change the center of gravity of the frame.

2. The photovoltaic power-generating apparatus as recited in claim 1, wherein the support frame part comprises a first support frame, a second support frame, and a third support frame and the fluid delivery unit, which is formed on each support frame, comprises valves for allowing each support frame to be opened in communication with each other or closed to each other and a pump for moving the fluid from each support frame to another support frame during opening of each valve.

3. The photovoltaic power-generating apparatus as recited in claim 1, wherein the support frame part comprises a first support frame, a second support frame, a third support frame, and a forth support frame, the first and second support frames being opposed to each other, the third support frame being spaced apart from the first and second support frames, and the third and fourth support frames being opposed to each other.

4. The photovoltaic power-generating apparatus as recited in claim 3, wherein the support frame part comprises a first valve for allowing the first and second support frames to be opened in communication with each other or closed to each other, a second valve for allowing the third and fourth support frames to be opened in communication with each other or closed to each other, and a pump for allowing the fluid to be moved between the first and second support frames during opening of the first valve or to be moved between the third and fourth support frames during opening of the second valve.

5. The photovoltaic power-generating apparatus as recited in any one of claims 1 thorough 4, wherein the lower frame is in the form of a hollow type, whereby providing a buoyancy to the frame.

6. A photovoltaic power-generating apparatus comprising:
a solar cell module for collecting a solar light and converting the collected solar light into an electrical energy;
a frame comprising an upper portion in which the solar cell module is installed and a buoyancy means for providing a buoyancy thereto in such a manner that the solar cell module is outwardly exposed from a surface of water;
first and second guide axes formed at the frame and intersected with each other;
first and second mass weights along first and second guide axes through a linear reciprocating motion respectively;
a mass weight delivery unit for moving any of first and second mass weights so as to change a posture of the frame on the water surface; and
a control unit for controlling the mass weight delivery unit, wherein the first and second mass weights are moved along the first and second guide axes through a linear reciprocating motion, whereby the posture of the frame changes.

7. The photovoltaic power-generating apparatus as recited in claim 6, wherein the first and second guide axes are actually parallel to the solar cell module.

8. The photovoltaic power-generating apparatus as recited in claims 6 or 7, wherein the mass weight delivery unit comprises a motor installed in one side of each mass weight in such a manner that each mass weight can be moved along each guide axis according the control of the control unit.

9. The photovoltaic power-generating apparatus as recited in claims 1 or 6, wherein the control unit calculate the target posture of the frame for the given sun location through any of sensor operating method, GPS tracking method, and calculating method based on the astronomical theory.
